# EUROPEAN PATENT APPLICATION

(11) **EP 1 365 562 A1**
(43) Date of publication of application: **26.11.2003**
(21) Application number: 02388036.2
(22) Date of filing: 24.05.2002
(51) Int. Cl.: H04M 1/02, G06K 7/00, H04B 1/38

(54) **An electronic device with a holder for at least two memory cards**

(71) Applicant: Sony Ericsson Mobile Communications AB, 221 88 Lund (SE)
(72) Inventor: Hermann, Fredrik, 217 54 Malmo (SE)
(74) Representative: Sundien, Thomas

(57) **Abstract**

An electronic device provided with a holder (10) for supporting at least two memory cards (12,9). The holder (10) comprises a first supporting area (11) for supporting a first memory card (12) and a second supporting area (13) for supporting a second memory card (9). The two supporting areas (11,13) are located at different levels in order to support the first and the second memory cards (12,9) in superposed relationship. The electronic device is arranged to allow access to the first supporting area (11) by displacing or removing a part of the electronic device. The holder (10) is fixed within the electronic device, and the electronic device is arranged in such manner that access to the second supporting area (13) is provided through a slot provided in a casing (2) of the electronic device.

## Description

### Technical area

The invention relates to an electronic device provided with a holder for supporting at least two memory cards, said holder comprising a first supporting area for supporting a first memory card and a second supporting area for supporting a second memory card, said two supporting areas being located at different levels in order to support the first and the second memory cards in superposed relationship, said electronic device being arranged to allow access to the first supporting area by displacing or removing a part of the electronic device.

### Related prior art

Many electronic devices, such as mobile telephones, are provided with a memory card in form of a SIM card (Subscriber Identity Module) that identifies the user of the electronic device. The SIM card is conventionally mounted in a SIM card holder that is located underneath an exchangeable and rechargeable battery, i.e. the part of the mobile telephone that is removed when the SIM card is mounted or removed consist of the battery. Additionally, it has become increasingly more popular to also include a reader for another kind of memory card, such as an MMC card (Multi Media Card) or the like, in the electronic device such that the electronic device is provided with two separate card readers, one for the SIM card and one for the additional memory card. The latter one may be accessible through a slot provided in the cover of the electronic device such that the additional memory card may be exchanged without need to disassembling the electronic device. In order to support the two types of memory cards, two separate components are provided that each is electrically connected to a PCB (Printed Circuit Board) provided in the electronic device.

US-A-5 933 328 discloses an electronic device in the form of a mobile telephone in which two memory cards or integrated circuits cards, such as a SIM card and an MMC card, can be mounted simultaneously. The device is provided with a hinged carrier that can releaseably receive one or both cards in such manner that when the carrier is swung into its closing position the contact terminals of the cards are brought into intimate contact with contact pins provided in the device. The two cards are located on top of each other and the carrier takes up only little more space in the electronic device than a single-card holder as generally known in the art.

EP-A2-1 037 159 discloses a mobile radio station comprising an interface card slot to which it is possible to connect either an MMC card or a small SIM card. The interface slot is sized to receive an MMC card and in order to connect the small SIM card a separate adapter the size of an MMC card is used, or, in addition to the first contact pins meant for use of an MMC card, second contact pins meant for use of a SIM card are arranged to the interface slot. In some embodiments at least some of the contact pins are being used to connect both the SIM card and the MMC card.

### Object of the invention

The electronic devices described above with holders for supporting two different memory cards, such as a SIM card and an MMC card, are arranged in such manner that either both cards are released simultaneously from the device (US-A-5 933 328) or only one card can be used at a time (EP-A2-1 037 159).

However, in many appliances it would be desirable if one card is safely mounted in the electronic device while another card is exchangeable. At the same time it is desirable to have both cards mounted in a common holder or carrier in order to save space in the electronic device.

It is therefore an object of the invention to provide an electronic device provided with a holder for supporting two memory cards, such as a SIM card and an MMC card or any other kind of memory card, that allows one memory card to be safely mounted in the electronic device while simultaneously allowing another memory card to be exchangeably mounted in the electronic device.

### Summary of the invention

The object of the invention is achieved by providing the electronic device mentioned in the opening paragraph with a holder that is fixed within the electronic device, and by arranging the electronic device in such manner that access to the second supporting area is provided through a slot provided in a casing of the electronic device.

Thereby is achieved that the second memory card is easily exchangeable from the outside of the electronic device without influencing the proper functioning of the first memory card. It should be noted that this goal is achieved by using a common holder for both memory cards which saves space in the electronic device.

In a preferred embodiment the holder comprising the first and second supporting areas is provided with electrical contact terminals at each supporting area for contacting electrical contact areas provided on the memory cards. By incorporating this feature in the holder, the use of other components provided with electrical terminals is avoided.

The holder is preferably mounted on a PCB (Printed Circuit Board) within the electronic device having the electrical contact terminals electrically connected to the circuit provided on the PCB. In this embodiment the holder can be mounted on the PCB in any conventional method, such as surface mounting, at the same time as all other electronic components.

In a preferred embodiment the electronic device is a mobile radio station, such as a mobile telephone, and furthermore, the first memory card is a SIM card (Subscriber Identity Module). The second memory card may be an MMC card (Multi Media Card) or any other kind of memory card.

It shall be emphasised that the term "comprise/comprising" when used in this specification is taken to specify the presence of stated features, integers, steps or components, but does not preclude the presence or addition of one or more other features, integers, steps components or groups thereof.

### Description of the drawings

The invention will be described in detail in the following with reference to the drawings in which
Fig. 1 shows an electronic device according to the invention in the shape of a mobile telephone provided with a slot for inserting a memory card;
Fig. 2 shows a holder for supporting two memory cards in an electronic device according to the invention; and
Fig. 3 shows a cross-section through the holder shown in Fig. 2 when mounted on a PCB.

### Detailed description of an embodiment of the invention

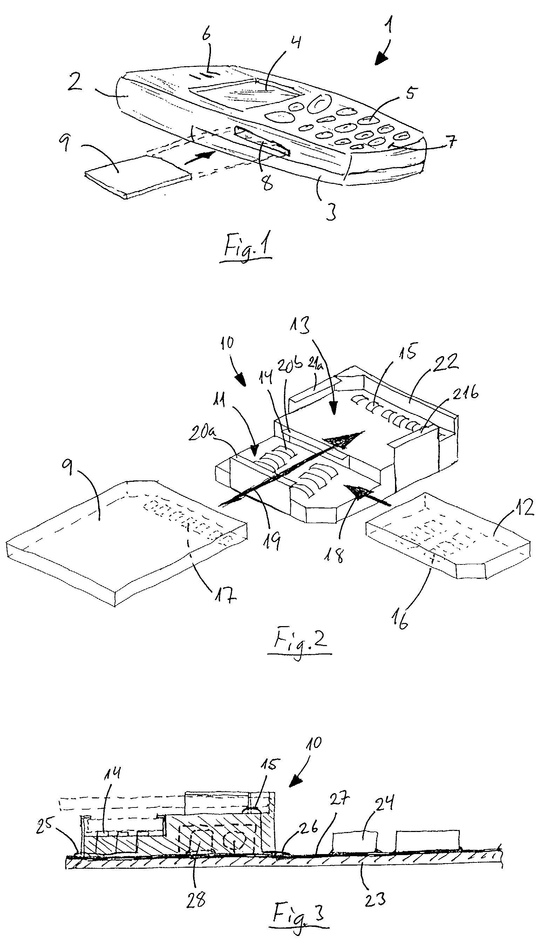

Fig. 1 shows an electronic device in the shape of a mobile telephone 1 provided with an outer casing 2 defining the overall design of the mobile telephone 1 and a rechargeable and exchangeable battery 3. The outer casing 2 is provided with a plurality of openings for e.g. a display 4, keys 5, a loudspeaker 6 and a microphone 7. Furthermore, the outer casing 2 is provided with a slot 8 for receiving a memory card 9, such as a multimedia card (MMC) or any other kind of memory card. This memory card 9 is a second one since a first one, such as a SIM card, is already mounted in the mobile telephone 1 (not shown in Fig. 1). The SIM card is normally mounted in a holder therefor which is accessible when a part, such as the exchangeable battery 3, is removed.

Conventionally, the SIM card and a second memory card 9 are received in separate holders provided on a PCB within the mobile telephone 1, i.e. the separate holders each takes up space on the PCB. As described above, an electronic device is known wherein a common holder for both memory cards is provided. However, this common holder does not allow one memory card to be changed without influencing the proper functioning of the other.

According to the present invention this problem is solved by providing a common holder for supporting two memory cards at the same time, which holder is arranged in the electronic device in such manner that one of the memory cards may be replaced without influencing the proper functioning of the other. An example of such a holder 10 is shown in Fig. 2.

The holder 10, which is preferably made as a moulded plastics unit, comprises a first supporting area 11 for supporting a first memory card 12, such as a SIM card, and a second supporting area 13 for supporting a second memory card 9, such as a MMC card. Each of the supporting areas 11,13 is provided with electrical contact terminals 14,15 for contacting electrical contact areas 16,17 provided on the memory cards (shown in broken lines in Fig. 2).

The first and second memory cards 12,9 can be mounted in the holder 10 by displacing them in the directions of the arrows 18,19, i.e. the first memory card 12 is displaced in one direction along the arrow 18, while the second memory card 9 is displaced in a transverse direction along the arrow 19. Guide rails 20a,2b and 21a,21b are provided at each side of the supporting areas 11,13 for guiding and withholding the first and second memory cards 12,9, respectively, at the supporting areas 11,13 when they are mounted therein. An upstanding wall 22 is provided at the end of the second supporting area 13, which wall acts as an end stop for the second memory card 9. A corresponding wall may be provided at the first supporting area 11 acting as an end stop for the first memory card 12 (not shown). Alternatively, the frame of the electronic device may be arranged to form such end stops.

The holder 10 is arranged in such manner within the mobile telephone 1 that the first memory card 12 can be mounted and dismounted in the holder 10 when the rechargeable battery 3 is removed and the second memory card 9 can be mounted and dismounted through the slot 8 provided in the casing 2 of the mobile telephone 1. Thereby is achieved that each of the memory cards 12,9 can be exchanged without influencing the proper functioning of the other. Normally, the first memory card 12 is a SIM card that is rarely changed and it is therefore acceptable that the exchangeable battery is dismounted before this memory card is changed. The second memory card 9 is e.g. an MMC card comprising any form of information and it is often desirable that such a memory card is easily changeable. The information provided on the second memory card 9 may be specific executable programs, statistical information, music, games, etc.

The holder 10 is preferably mounted on a PCB 23 provided within the mobile telephone 1 as shown in Fig. 3. The PCB 23 is provided with various electronic components 24 that are mounted on the PCB 23 by any conventional method, preferably by a surface mounting technique. The holder 10 is preferably also mounted on the PCB 23 by such method.

In Fig. 3 the holder 10 is shown in cross-section and it is illustrated how the electrical contact terminals 14,15 are wired through the body of the holder 10 to outwardly protruding legs 25,26 that are connected to the circuit 27 provided on the PCB 23 by any conventional method.

In order to save space on the PCB 23 the holder 10 may be made hollow as illustrated by broken lines, thereby allow electronic components 28 to be mounted on the PCB 23 below at least a part of the holder 10.

The invention has been described with reference to an embodiment of the electronic device provided with a holder for supporting two memory cards at the same time. However, the electronic device need not be a mobile telephone as shown in Fig. 1, but may be any kind of electronic device in which it is desired to provide more than one memory card. Also, the memory cards need not be a SIM card an MMC card, but may be any desired memory card containing the desired information. Apart from memory cards, such cards are sometimes called integrated circuit cards (IC cards), smart cards, etc. The present invention is applicable to all such types of cards.

Fig. 2 and 3 show a holder 10 provided with guide rails 20a,20b and 21a,21b for guiding and withholding the memory cards at the supporting areas 11,13. However, other guiding and holding means may be provided, either in connection with the holder itself or in connection with other components provided in the electronic device or even in connection with the frame of the electronic device. The holding means may comprise a mechanism that allows at least the second memory card 9 to be easily mounted in and released from the holder by a push-push handling from the outside of the electronic device.

Various other modifications are possible within the scope of the attached claims.

## Claims

1. An electronic device provided with a holder (10) for supporting at least two memory cards (12,9), said holder (10) comprising a first supporting area (11) for supporting a first memory card (12) and a second supporting area (13) for supporting a second memory card (9), said two supporting areas (11,13) being located at different levels in order to support the first and the second memory cards (12,9) in superposed relationship, said electronic device being arranged to allow access to the first supporting area (11) by displacing or removing a part (3) of the electronic device, **characterised in that** the holder (10) is fixed within the electronic device, and that the electronic device is arranged in such manner that access to the second supporting area (13) is provided through a slot (8) provided in a casing (2) of the electronic device.

2. An electronic device according to claim 1, **characterised in that** the holder (10) comprising the first and second supporting areas (11,13) is provided with electrical contact terminals (14,15) at each supporting area for contacting electrical contact areas (16,17) provided on the memory cards (12,9).

3. An electronic device according to claim 2, **characterised in that** the holder (10) is mounted on a PCB (Printed Circuit Board) (23) within the electronic device having the electrical contact terminals (14,15) electrically connected to the circuit (27) provided on the PCB (23).

4. An electronic device according to any one of claims 1-3, **characterised in that** the electronic device is a mobile radio station, such as a mobile telephone (1).

5. An electronic device according to claim 4, **characterised in that** the first memory card (12) is a SIM card (Subscriber Identity Module).
